# EUROPÄISCHE PATENTSCHRIFT

(11) **EP 2 144 796 B1**
(45) Veröffentlichungstag und Bekanntmachung des Hinweises auf die Patenterteilung: **03.10.2012**
(21) Anmeldenummer: 08717522.0
(22) Anmeldetag: 07.03.2008
(51) Int. Cl.: B60T 8/26, B60T 8/52, F16D 65/14

(54) **Verfahren zum Betrieb einer hydraulischen Fahrzeugbremsanlage**
Operating method for a hydraulic vehicle braking system
Méthode de fonctionnement d'un système de freinage hydraulique

(30) Priorität: 02.05.2007 DE 102007020503
(43) Veröffentlichungstag der Anmeldung: 20.01.2010
(73) Patentinhaber: Robert Bosch GmbH, 70442 Stuttgart (DE)
(72) Erfinder: BAUMANN, Dietmar, 71282 Hemmingen (DE)
(86) Internationale Anmeldenummer: PCT/EP2008/052775
(87) Internationale Veröffentlichungsnummer: WO 2008/135301

(56) Entgegenhaltungen:
- WO-A-96/15925
- WO-A-96/39318
- WO-A1-02/40887
- DE-A1- 3 923 955
- US-A- 5 544 724
- US-A- 5 573 314
- US-A1- 2007 045 061

## Beschreibung

### Stand der Technik

Die Erfindung betrifft ein Verfahren zum Betrieb einer hydraulischen Fahrzeugbremsanlage mit hydraulischen Radbremsen.

Es sind selbstverstärkende hydraulische Radbremsen für Kraftfahrzeuge in Bauform von Scheibenbremsen bekannt. Sie weisen grundsätzlich den Aufbau konventioneller Radbremsen (Scheibenbremsen) ohne Selbstverstärkung auf und sind um eine Selbstverstärkungseinrichtung ergänzt. Sie weisen also einen Bremskolben auf, der bei hydraulischer Druckbeaufschlagung einen Reibbremsbelag gegen eine Bremsscheibe drückt. Zur Selbstverstärkung ist mindestens ein Reibbremsbelag parallel zur Bremsscheibe in deren Umfangs- oder Sehnenrichtung verschiebbar und stützt sich gegen einen Hilfskolben ab. Bei betätigter Scheibenbremse beaufschlagt die drehende Bremsscheibe den gegen sie gedrückten Reibbremsbelag gegen den Hilfskolben, der Bremsflüssigkeit verdrängt und auf diese Weise einen Hydraulikdruck erzeugt, der den Bremskolben oder einen zusätzlichen Kolben beaufschlagt, welcher den Reibbremsbelag zusätzlich gegen die Bremsscheibe drückt. Die Spannkraft, d. h. die Andruckkraft, mit der der Reibbremsbelag gegen die Bremsscheibe gedrückt wird, wird dadurch erhöht, die Scheibenbremse weist eine Selbstverstärkung auf. Zur Erzielung einer Selbstverstärkung für beide Drehrichtungen der Bremsscheibe können an beiden Enden des Reibbremsbelags Hilfskolben vorgesehen sein. Es handelt sich um eine hydraulische Selbstverstärkung.

Die Offenlegungsschrift DE 103 38 449 A1 offenbart eine Fahrzeugbremsanlage mit elektromechanischen Radbremsen, wobei Radbremsen von Rädern einer Vorderachse eine Selbstverstärkung aufweisen. Radbremsen von Rädern einer Hinterachse sind wahlweise konventionell, d. h. ohne Selbstverstärkung, oder selbstverstärkend. Die Radbremsen der bekannten Fahrzeugbremsanlage weisen ebenfalls die Bauform von Scheibenbremsen auf. Sie sind elektromechanisch betätigt, sie weisen einen Elektromotor, der über ein Rotations-/Translations-Umsetzungsgetriebe, beispielsweise ein Schraubgetriebe, einen Reibbremsbelag gegen eine Bremsscheibe drückt. Vorzugsweise ist dem Elektromotor und dem Schraubgetriebe ein Untersetzungsgetriebe zwischengeschaltet. Die Selbstverstärkung erfolgt mechanisch mittels eines Keilmechanismus, der Reibbremsbelag ist in Umfangs- oder Sekantenrichtung der Bremsscheibe verschiebbar und stützt sich an einer Keilfläche ab, die in einem Winkel schräg zur Bremsscheibe verläuft. Ist der Reibbremsbelag in Umfangsrichtung zur Bremsscheibe, d. h. auf einer Kreisbogenbahn verschiebbar, ist die Keilfläche genau genommen schraubenlinienförmig. Der Keilwinkel kann über die Länge der Keilfläche konstant sein, er kann sich auch ändern. In letzterem Fall spricht man von einem Rampenmechanismus. Die Höhe die Selbstverstärkung ändert sich mit dem Keilwinkel, es lässt sich mit einem sich über den Verschiebeweg spitzer werdenden Keilwinkel eine höhere Selbstverstärkung bei hoher Spann- und Bremskraft erzielen.

Das Prinzip elektromechanischer Radbremsen lässt sich nicht, jedenfalls nicht ohne Weiteres auf eine hydraulische Fahrzeugbremsanlage übertragen. Ein Grund dafür ist, dass hydraulische Radbremsen, die gemeinsam an einen Bremskreis angeschlossen sind, miteinander kommunizieren, ihre Spannkraft steht im Verhältnis der Kolbenflächen Ihrer Bremskolben. Elektromechanische Radbremsen sind voneinander unabhängig, es gibt keine Wechselwirkung, insbesondere beeinflusst eine Spann- oder eine Bremskraft einer Radbremse nicht die an einer anderen Radbremse wirksamen Kräfte. Ein weiterer Grund ist eine Verschleißnachstellung, die bei hydraulischen Radbremsen, jedenfalls wenn sie als Scheibenbremsen ausgeführt sind, selbsttätig erfolgt. Bei einer eine Selbstverstärkung mit einem Keilmechanismus aufweisenden elektromechanischen Radbremse kann ein Verschleißausgleich des Reibbremsbelags dadurch erfolgen, dass der zur Betätigung der Radbremse entlang der Keilfläche verschobene Reibbremsbelag beim Lösen der Radbremse nicht vollständig zurück in seine Ausgangslage verschoben wird. Dieser Verschleißausgleich erfolgt jedoch nicht selbsttätig und hat zudem den Nachteil, dass bei einem Fahrtrichtungswechsel der Reibbremsbelag erst aus der ausgelenkten Stellung in die Ausgangstellung verschoben werden muss, bevor eine Zustellung zur Bremsscheibe erfolgen kann.

Die Internationale Patentanmeldung WO 96/15 925 A offenbart eine hydraulische Fahrzeugbremsanlage mit hydraulischen Scheibenbremsen ohne Selbstverstärkung an Rädern einer Vorderachse und mit hydraulischen Trommelbremsen an Rädern einer Hinterachse. Außerdem verfügt diese Fahrzeugbremsanlage über einen zentralen Unterdruck-Bremskraftverstärker zwischen einem Fußbremspedal und einem Hauptbremszylinder. Über den Hauptbremszylinder wirkt der Bremskraftverstärker auf alle Radbremsen.

Die Offenlegungsschrift DE 39 23 955 offenbart eine vergleichbare Fahrzeugbremsanlage mit der Maßgabe, dass sie keine Trommelbremsen, sondern an allen Achsen hydraulische Scheibenbremsen ohne Selbstverstärkung aufweist. Ein Bremskraftverstärker ist nicht offenbart.

Das Patent US 5,544,724 A offenbart eine hydraulische Fahrzeugbremsanlage mit hydraulischen Scheibenbremsen an allen Fahrzeugrädern. Scheibenbremsen der Vorderräder stützen sich in Umfangsrichtung von Bremsscheiben an Druckerzeugern ab, die Zylinder-Kolben-Einheiten aufweisen. Bei einer Bremsbetätigung verschieben die Scheibenbremsen der Vorderräder Kolben der Druckerzeuger in deren Zylinder hinein und verdrängen dadurch Bremsflüssigkeit aus den Zylindern. Die aus den Druckerzeugem verdrängte Bremsflüssigkeit wird über eine Drucksteuerventileinrichtung wahlweise den Scheibenbremsen aller Fahrzeugräder oder einem Hauptbremszylinder zugeführt. Der Drucksteuerventileinrichtung und den Radbremsen einer Hinterachse sind Dossierventile zwischengeschaltet.

Das Patent US 5,573,314 A offenbart eine hydraulische Fahrzeugbremsanlage mit einer Zahnradpumpe zu einer elektrohydraulischen Bremskraftverstärkung und hydraulischen Scheibenbremsen als Radbremsen mit einem mechanischen Keilmechanismus zur Bremskraftverstärkung.

Die Patentanmeldung US 2007/0 045 061 A1 offenbart eine hydraulische Scheibenbremse mit einer hydraulischen Selbstverstärkung. Dazu ist ein Reibbremsbelag in Drehrichtung einer Bremsscheibe beweglich und stützt sich an einem hydraulischen Verstärkerkolben ab, der mit einer Ringfläche eines Bremskolbens kommuniziert, der zu einer hydraulischen Trennung eines Hauptbremszylinders vom Verstärkerkolben als Stufenkolben ausgeführt ist. Der Hauptbremszylinder beaufschlagt den Bremskolben der Scheibenbremse zentral und wie gesagt hydraulisch getrennt vom Verstärkerkolben. Stützt sich der Reibbremsbelag bei betätigter Scheibenbremse am Verstärkerkolben ab, erzeugt der Verstärkerkolben einen hydraulischen Druck, den er auf die Ringfläche des Bremskolbens überträgt. Dadurch erhöht sich eine Spannkraft, mit der der Bremskolben den Reibbremsbelag gegen die Bremsscheibe drückt. Mit zwei Magnetventilen lässt sich eine Höhe der Selbstverstärkung, d. h. ein Selbstverstärkungsfaktor der Scheibenbremse regeln: Mit einem der beiden Magnetventile lässt sich der Verstärkerkolben hydraulisch vom Bremskolben trennen, mit dem anderen Magnetventil lässt sich die Ringfläche des Bremskolbens mit einem Hydrospeicher verbinden, d. h. der Verstärkerdruck und damit die Selbstverstärkung senken.

Die internationale Patentanmeldung WO 02/40 887 A1 offenbart eine elektromechanische Scheibenbremse mit mechanischer Selbstverstärkung. Eine Bremsbetätigung erfolgt mit einem Elektromotor, der über einen Kugelumlauftrieb einen Reibbremsbelag gegen eine Bremsscheibe drückt. Der Reibbremsbelag ist in Drehrichtung der Bremsscheibe beweglich und stützt sich an zwei Rampen mit entgegengerichteten Steigungen ab, die die Selbstverstärkung bewirken. Für jede Drehrichtung der Bremsscheibe ist eine Rampe vorhanden.

### Offenbarung der Erfindung

Die erfindungsgemäße hydraulische Fahrzeugbremsanlage mit den Merkmalen des Anspruchs 1 kombiniert selbstverstärkende hydraulische Radbremsen an Rädern einer Vorderachse mit hydraulischen Radbremsen ohne Selbstverstärkung an Rädern einer Hinterachse. Die die Selbstverstärkung aufweisenden Radbremsen wirken vorzugsweise in beiden Fahrtrichtungen selbstverstärkend, wobei üblicherweise eine Selbstverstärkung für Vorwärtsfahrt wichtiger als für Rückwärtsfahrt ist und demzufolge eine Selbstverstärkungswirkung für die eine Fahrtrichtung, insbesondere die Vorwärtsfahrtrichtung, genügen kann. Die selbstverstärkenden Radbremsen weisen eine mechanische Selbstverstärkungseinrichtung mit einem Keilmechanismus auf, worunter auch ein Rampenmechanismus mit sich über die Länge des Verschiebewegs des Reibbremsbelags änderndem Keilwinkel verstanden werden soll. Für eine Selbstverstärkungswirkung in beiden Fahrtrichtungen kann der Keilmechanismus eine Gegenkeilfläche mit entgegengesetzter Steigung aufweisen. Um ein Blockieren der Fahrzeugräder zu verhindern weisen die selbstverstärkenden Radbremsen eine Rückstellfeder auf, die einer Erhöhung der Bremskraft entgegenwirkt.

Das erfindungsgemäße Verfahren sieht vor, dass bei hohen Belagreibwerten ein Bremsdruck durch Öffnen von Ventilen abgesenkt wird. Insbesondere werden vorhandene Ventile, beispielsweise Auslass- oder Bremsdruckabsenkventile geöffnet bzw. es wird der Bremsdruck durch Steuerung oder Regelung der Ventile gesteuert oder geregelt. Dadurch wird der Bremsdruck in der oder den Radbremsen verringert bzw. der Bremsdruckanstieg vermindert. Auf diese Weise wird eine Steigung der Pedalkraft/Pedalweg-Kennlinie verringert mit dem Ziel, sie bei sich änderndem Belagreibwert in etwa konstant zu halten oder jedenfalls ihre Variation zu verringern. Die Rückwirkung sich durch Temperatur, Wasser oder Schmutz ändernder Belagreibwerte auf ein Fußbremspedal oder einen Handbremsgriff verringert sich, eine Schwankung eines zum Aufbau einer bestimmten Bremskraft erforderlichen Fußpedal- oder Handhebelwegs ist geringer als die Änderung des Belagreibwerts.

Ein Vorteil der Erfindung ist, dass die Fahrzeugbremsanlage kostengünstiger ist als eine Fahrzeugbremsanlage, deren Radbremsen alle selbstverstärkend sind, da selbstverstärkende Radbremsen aufgrund des größeren Herstellungsaufwands wegen der zusätzlichen Selbstverstärkungseinrichtung teurer als konventionelle Radbremsen ohne Selbstverstärkung sind. Sofern eine selbstverstärkende Radbremse mit einer Radbremse ohne Selbstverstärkung kommuniziert, wirkt sich die Selbstverstärkung auch auf die Radbremse ohne Selbstverstärkung aus. Durch Auslegung der selbstverstärkenden Radbremsen mit einer hohen Selbstverstärkung lässt sich mit allen Radbremsen der erfindungsgemäßen Fahrzeugbremsanlage eine Selbstverstärkung erzielen, die der Selbstverstärkung einer Fahrzeugbremsanlage entspricht, deren Radbremsen alle selbstverstärkend, allerdings mit niedrigerer Selbstverstärkung sind. Trotz Verwendung von Radbremsen ohne Selbstverstärkung kann die Selbstverstärkung der erfindungsgemäßen Fahrzeugbremsanlage so hoch wie die Selbstverstärkung einer Fahrzeugbremsanlage sein, bei der alle Radbremsen selbstverstärkend sind.

Ein weiterer Vorteil der Erfindung ist eine gegenüber Fahrzeugbremsanlagen ohne Selbstverstärkung geringere Betätigungsenergie und Betätigungsleistung. Die Unteransprüche haben vorteilhafte Ausgestaltungen und Weiterbildungen der im Anspruch 1 angegebenen Erfindung zum Gegenstand. Gemäß Anspruch 2 weisen die selbstverstärkenden Radbremsen eine andere Federrate auf als die Radbremsen ohne Selbstverstärkung, vorzugsweise weisen die selbstverstärkenden Radbremsen eine höhere Federrate auf als die Radbremsen ohne Selbstverstärkung (Anspruch 3). Die Radbremse, bei einer Scheibenbremse der Bremssattel und der Reibbremsbelag, sind nicht absolut steif, sondern sie werden durch die Spannkraft verformt, der Bremssattel wird aufgeweitet und der Reibbremsbelag zusammengedrückt. Der tatsächliche Zustell- oder Spannweg, um den der Bremskolben bei einer Bremsung verschoben wird, vergrößert sich dadurch. Das Verhältnis zwischen Spannkraft und Spannweg gibt die Federrate an. Eine höhere Federrate bedeutet eine steifere Bremse und einen kürzeren Spannweg des Bremskolbens zum Aufbau einer bestimmten Spannkraft. Durch unterschiedliche Federraten der Bremssattel bzw. der Radbremsen der Räder an der Vorder- und an der Hinterachse bzw. der selbstverstärkenden Radbremsen und der Radbremsen ohne Selbstverstärkung kann eine Pedalkraft/Pedalweg-Kennlinie der Fahrzeugbremsanlage beeinflusst werden. Anzustreben ist eine Kennlinie, wie sie ein Fahrer sie von herkömmlichen hydraulischen Fahrzeugbremsanlagen beispielsweise mit Unterdruckbremskraftverstärker und ohne selbstverstärkende Radbremsen gewohnt ist. Durch Wahl der Federraten der selbstverstärkenden Radbremsen und der Radbremsen ohne Selbstverstärkung und auch durch die Höhe der Selbstverstärkung lässt sich diese gewohnte Kennlinie zumindest näherungsweise erreichen. Des Weiteren ist es mit dieser Ausgestaltung der Erfindung möglich, die Abhängigkeit der Pedalkraft/Pedalweg-Kennlinie insbesondere bei Änderung eines Belagreibwerts zwischen dem Reibbremsbelag und der Bremsscheibe niedrig zu halten.

Eine Ausgestaltung der Erfindung gemäß Anspruch 5 sieht vor, dass die Fahrzeugbremsanlage keinen Bremskraftverstärker, beispielsweise keinen Unterdruckbremskraftverstärker und auch keine separate Unterdruckpumpe aufweist. Diese Aggregate werden eingespart, was Kosten und Bauraumvorteile mit sich bringt. Die Bremskraftverstärkung erfolgt durch die Verstärkungswirkung der selbstverstärkenden Radbremsen und über das Verhältnis der Kolbenflächen eines Hauptbremszylinders und der Bremskolben der Radbremsen.

Anspruch 6 sieht vor, dass die selbstverstärkenden Reibungsbremsen wegverstärkend sind. Dabei verkürzt die Verschiebung des Reibbremsbelags in Umfangsrichtung der drehenden Bremsscheibe den Spannweg des Bremskolbens. Durch eine größere hydraulische Kraftübersetzung, d. h. eine kleinere Kolbenfläche des Hauptbremszylinders im Verhältnis zu den Kolbenflächen der Bremskolben der Radbremsen lässt sich mit wegverstärkenden Radbremsen eine hohe Verstärkungswirkung erreichen.

### Kurze Beschreibung der Zeichnungen

Die Erfindung wird nachfolgend anhand eines in der Zeichnung dargestellten Ausführungsbeispiels näher erläutert. Es zeigen:

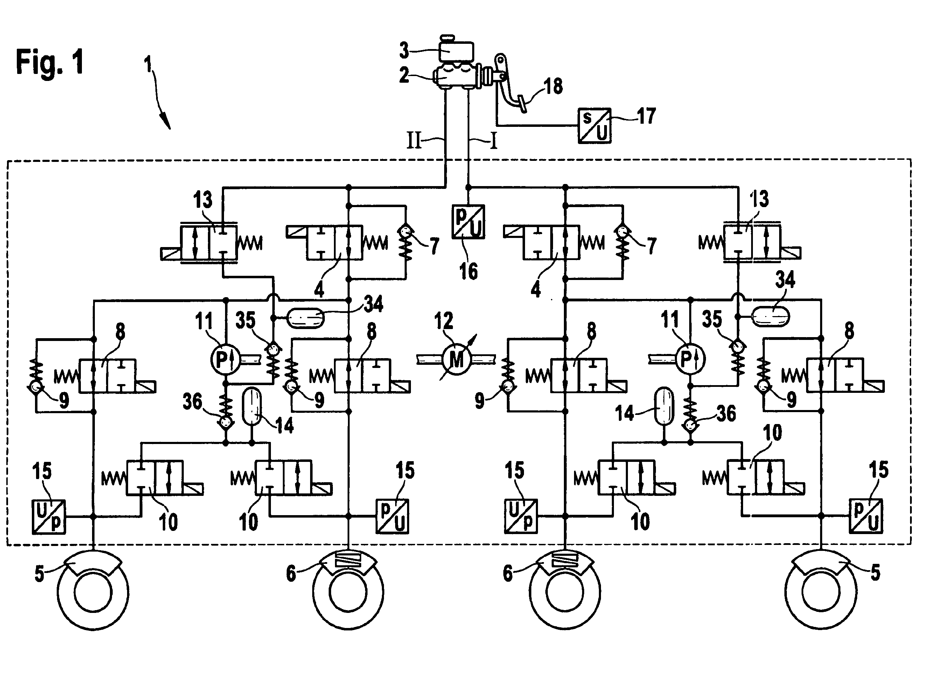

- Figur 1: einen hydraulischen Schaltplan einer Fahrzeugbremsanlage gemäß der Erfindung; und
- Figuren 2 und 3: Radbremsen der erfindungsgemäßen Fahrzeugbremsanlage aus Figur 1.

### Ausführungsform der Erfindung

Die in der Zeichnung dargestellte erfindungsgemäße hydraulische Fahrzeugbremsanlage 1 weist eine Schlupfregelung (Blockierschutzregelung ABS; Antriebsschlupfregelung ASR; Fahrdynamikregelung FDR, ESP) auf. Sie ist als Zweikreisbremsanlage mit zwei Bremskreisen I, II ausgebildet, die an einen Hauptbremszylinder 2 angeschlossen sind. Der Hauptbremszylinder 2 weist keinen Bremskraftverstärker auf. Der Hauptbremszylinder 2 weist einen Bremsflüssigkeitsvorratsbehälter 3 auf, der auf ihn aufgesetzt ist. Jeder Bremskreis I, II ist über ein Trennventil 4 an den Hauptbremszylinder 2 angeschlossen. Die Trennventile 4 sind in ihrer stromlosen Grundstellung offene 2/2-Wege-Magnetventile. Den Trennventilen 4 ist jeweils ein vom Hauptbremszylinder 2 zu Radbremsen 5, 6 durchströmbares Rückschlagventil 7 hydraulisch parallel geschaltet. An das Trennventil 4 jedes Bremskreis I, II sind die Radbremsen 5, 6 über Bremsdruckaufbauventile 8 angeschlossen. Die Bremsdruckaufbauventile 8 sind in ihrer stromlosen Grundstellung offene 2/2-Wege-Magnetventile. Ihnen sind Rückschlagventile 9 parallel geschaltet, die von den Radbremsen 5, 6 in Richtung zum Hauptbremszylinder 2 durchströmbar sind.

An jeden Radbremszylinder 5, 6 ist ein Bremsdruckabsenkventil 10 angeschlossen, die gemeinsam an eine Saugseite einer Hydropumpe 11 angeschlossen sind. Die Bremsdruckabsenkventile 10 sind als in ihrer stromlosen Grundstellung geschlossene 2/2-Wege-Magnetventile ausgebildet. Eine Druckseite der Hydropumpe 11 ist zwischen den Bremsdruckaufbauventilen 8 und den Trennventilen 4 angeschlossen, d. h. die Druckseite der Hydropumpe 11 ist über die Bremsdruckaufbauventile 8 mit den Radbremsen 5, 6 und über das Trennventil 4 mit dem Hauptbremszylinder 2 verbunden.

Jeder der beiden Bremskreise I, II weist eine Hydropumpe 11 auf, die gemeinsam mit einem Elektromotor 12 antreibbar sind.

Über Ansaugventile 13 sind die Saugseiten der Hydropumpen 11 mit dem Hauptbremszylinder 2 verbunden. Die Ansaugventile 13 sind in ihrer stromlosen Grundstellung geschlossene 2/2-Wege-Magnetproportionalventile. Zu einem schnellen Bremsdruckaufbau werden die Ansaugventile 13 geöffnet, so dass die Hydropumpen 11 unmittelbar aus dem Hauptbremszylinder 2 ansaugen. Das ist insbesondere dann wichtig, wenn bei nicht betätigtem Hauptbremszylinder 2 mit den Hydropumpen 11 ein Radbremsdruck aufgebaut werden soll. Das ist beispielsweise bei einer Antriebsschlupfregelung beim Anfahren oder Beschleunigen und teilweise bei einer Fahrdynamikregelung der Fall.

Auf den Radbremsen 5, 6 abgewandten Seiten der Bremsdruckabsenkventile 10 und damit an den Saugseiten der Hydropumpen 11 ist in jedem Bremskreis I, II ein Hydrospeicher 14 angeschlossen. Die Hydrospeicher 14 dienen zur Zwischenspeicherung von Bremsflüssigkeit, die während einer Schlupfregelung durch die Bremsdruckabsenkventile 10 aus den Radbremsen 5, 6 ausgelassen werden. Es können zusätzliche Hydrospeicher 34 zur Aufnahme von Bremsflüssigkeit aus dem Hauptbremszyiinder 2 vorhanden sein. Die zusätzlichen Hydrospeicher 34 sind zwischen den Ansaugventilen 13 und den Saugseiten der Hydropumpen 11 angeschlossen, wobei den zusätzlichen Hydrospeichern 34 und den Hydropumpen 11 in Richtung der Hydropumpen 11 durchströmbare Rückschlagventile 35 zwischengeschaltet sind. Ausserdem sind in diesem Fall Rückschlagventile 36 zwischen den Hydrospeichern 14 und den Hydropumpen 11 vorzusehen, die in Richtung der Hydropumpen 11 durchströmbar sind. Durch Öffnen der Ansaugventile 13 gelangt bei betätigtem oder Betätigung des Hauptbremszylinders 2 Bremsflüssigkeit aus dem Hauptbremszylinder 2 in die zusätzlichen Hydrospeicher 34, die den Hydropumpen 11 zur Verfügung steht. Wie gesagt sind die zusätzlichen Hydrospeicher 34 mit ihren Rückschlagventilen 35 und den Rückschlagventilen 36 nicht erforderlich, sondern können vorgesehen sein.

Die Bremsdruckaufbauventile 8 und die Bremsdruckabsenkventile 10 bilden Radbremsdruckmodulationsventilanordnungen, mit denen bei angetriebener Hydropumpe 11 eine radindividuelle Bremsdruckregelung zur Schlupfregelung in an sich bekannter und hier nicht zu erläuternder Weise möglich ist.

Bei einer Schlupfregelung werden die Trennventile 4 geschlossen und die Bremskreise I, II dadurch hydraulisch vom Hauptbremszylinder 2 getrennt. Dadurch werden Rückwirkungen, insbesondere ein vibrierendes Fußbremspedal oder, insbesondere bei einem Kraftrad, ein vibrierender Handbremshebel, durch Druckpulsationen der Bremsflüssigkeit als Folge der Bremsdruckmodulation vermieden. Außerdem verhindern die geschlossenen Trennventile 4, dass von den Hydropumpen 11 geförderte Bremsflüssigkeit in den Hauptbremszylinder 2 zurück strömt, wenn dieser nicht betätigt ist. Konstruktionsbedingt trennt der Hauptbremszylinder 2 bei seiner Betätigung den Bremsflüssigkeitsvorratsbehälter 3 hydraulisch von sich. Ein Rückströmen von Bremsflüssigkeit, die von den Hydropumpen 11 gefördert wird, in den Hauptbremszylinder 2 ist deswegen ausgeschlossen, wenn der Hauptbremszylinder 2 betätigt ist.

An jede Radbremse 5, 6 ist ein Drucksensor 15 angsschlossen. Ein weiterer Drucksensor 16 ist in einem der beiden Bremskreise I an den Hauptbremszylinder 2 angeschlossen. Der Hauptbremszylinder 2 weist einen Pedalwegsensor 17 auf, mit dem ein Pedalweg eines Fußbremspedals 18 gemessen wird.

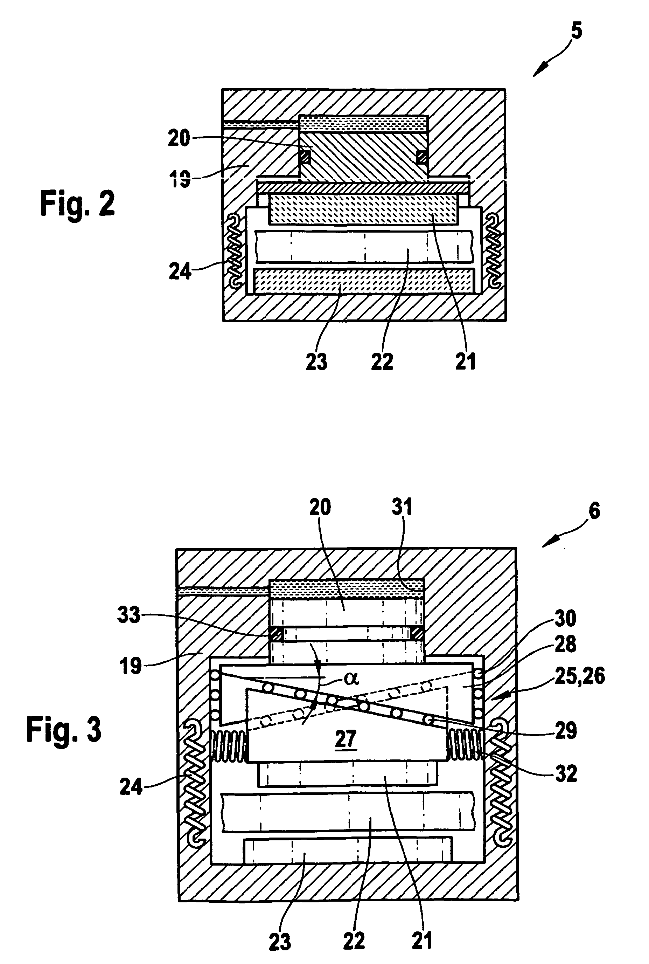

Die Radbremsen 5, 6 der erfindungsgemäßen Fahrzeugbremsanlage 1 sind hydraulische Scheibenbremsen, allerdings ist die Erfindung nicht auf Scheibenbremsen beschränkt. Die an Rädern einer Hinterachse eines mit der Fahrzeugbremsanlage 1 ausgerüsteten Kraftfahrzeugs angeordneten Radbremsen 5 sind herkömmliche hydraulische Scheibenbremsen ohne Selbstverstärkung, wie eine in Figur 2 schematisiert und vereinfacht dargestellt ist. Die nachfolgend auch als Scheibenbremse 5 bezeichnete Radbremse 5 weist einen Bremssattel 19 auf, in dem ein Bremskolben 20 angeordnet ist, mit dem ein Reibbremsbelag 21 gegen eine Bremsscheibe 22 drückbar ist. Der Bremssattel 19 ist als Schwimmsattel ausgebildet, d. h. er ist quer zur Bremsscheibe 22 verschiebbar. Durch Drücken des Reibbremsbelags 21 gegen die eine Seite der Bremsscheibe 22 wird der Bremssattel 19 quer zur Bremsscheibe 22 verschoben und drückt einen auf der anderen Seite der Bremsscheibe 22 angeordneten Reibbremsbelag 23 gegen die Bremsscheibe 22, die dadurch gebremst wird. Dies ist an sich bekannt und braucht nicht weiter erläutert zu werden. Der Bremssattel 19 lässt sich nicht absolut steif ausbilden, er weist eine Elastizität auf, durch die er sich aufgrund einer Spannkraft, mit der der Bremskolben 20 die Reibbremsbeläge 21, 23 zum Bremsen gegen die Bremsscheibe 22 drückt, aufweitet. Die Elastizität des Bremssattels 19 ist in Figur 2 mit Federn 24 veranschaulicht. Tatsächlich sind keine solchen Federn 24 vorhanden. Durch die Elastizität des Bremssattels 19 verlängert sich ein Spannweg des Bremskolbens 20 beim Betätigen der Scheibenbremse 5. Die Elastizität des Bremssattels 19 kann mit einer Federrate c erfasst werden, die das Verhältnis der Spannkraft, mit der der Bremskolben 20 bei Betätigung der Scheibenbremse 5 die Reibbremsbeläge 21, 23 gegen die Bremsscheibe 22 drückt, zu einem Verschiebe- oder Spannweg des Bremskolbens 20 angibt. Die Federrate c umfasst auch eine Elastizität der Reibbremsbeiäge 21, 23, die durch die Spannkraft beim Betätigen der Scheibenbremse 5 elastisch zusammengedrückt werden. Je größer die Federrate c, desto steifer ist der Bremssattel 19, d. h. seine Aufweitung bei Betätigung der Scheibenbremse 5 ist geringer.

Die Radbremsen 6 der Räder der Vorderachse sind ebenfalls Scheibenbremsen, im Unterschied zu den Radbremsen 5 der Räder der Hinterachse weisen sie allerdings eine Selbstverstärkung auf. In Figur 3 sind die nachfolgend auch als Scheibenbremsen 6 bezeichneten Radbremsen 6 der Räder der Vorderachse schematisiert dargestellt. Auch die selbstverstärkenden Radbremsen 6 der Räder der Vorderachse sind nicht auf den Bremsentyp von Scheibenbremsen beschränkt. Die Scheibenbremsen 6 weisen eine mechanische Selbstverstärkungseinrichtung 25 mit einem Keilmechanismus 26 auf: Der Reibbremsbelag 21 auf einer Seite der Bremsscheibe 22 weist einen Keilkörper 27 auf seiner der Bremsscheibe 22 abgewandten Rückseite auf. Mit dem Keilkörper 27 stützt sich der Reibbremsbelag 21 an einem Widerlager 28 ab, das schräg in einem Keilwinkel α zur Bremsscheibe 22 verläuft. Der Reibbremsbelag 21 ist in Umfangsrichtung oder einer Sekantenrichtung und im Keilwinkel α schräg zur Bremsscheibe 22 entlang des Widerlagers 28 verschiebbar. Die Verschiebbarkeit des Keilkörpers 27 entlang des Widerlagers 28 ist mit Wälzkörpern 29 dargestellt, grundsätzlich ist auch eine Gleitlagerung möglich. Das Widerlager 28 ist gegen eine Verschiebung in Umfangsrichtung der Bremsscheibe 22 im Bremssattel 19 abgestützt, senkrecht zur Bremsscheibe 22 ist das Widerlager 28 verschiebbar. Die Abstützung und verschiebbare Führung ist in Figur 3 mit Wälzkörpern 30 dargestellt, auch hier ist eine Gleitlagerung möglich. Zur Erzielung einer Selbstverstärkung bei umgekehrter Drehrichtung der Bremsscheibe weisen der Keilkörper 27 und das Widerlager 28 entgegengesetzt schräg verlaufende Flächen auf, die mit Strichlinien angedeutet sind. Der Keilkörper 27 und das Widerlager 28 greifen rippenartig ineinander, die entgegengesetzt schräg verlaufenden Flächen sind in Blickrichtung und in radialer Richtung zur Bremsscheibe 22 (abwechselnd mehrfach) hintereinander angeordnet. Die Keilwinkel α für beide Drehrichtungen der Bremsscheibe 22 können gleich oder unterschiedlich sein.

Zur Betätigung weist die selbstverstärkende Scheibenbremse 6 einen Bremskolben 20 wie herkömmliche Scheibenbremsen ohne Selbstverstärkung auf, der das Widerlager 28 und über dieses den Keilkörper 27 mit dem Reibbremsbelag 21 beaufschlagt. Drückt der Bremskolben 20 zur Betätigung der Scheibenbremse 6 den Reibbremsbelag 21 gegen die drehende Bremsscheibe 22, verschiebt die von der drehenden Bremsscheibe 22 auf den gegen sie gedrückten Reibbremsbelag 21 ausgeübte Reibungskraft den Reibbremsbelag 21 zusammen mit dem Keilkörper 27 in der Drehrichtung der Bremsscheibe 22. Aufgrund der Abstützung unter dem Keilwinkel α am Widerlager 28 erfolgt eine Zustellung des Reibbremsbelags 21 zur Bremsscheibe 22, eine Verschiebung des als Schwimmsattel ausgebildeten Bremssattels 19 quer zur Bremsscheibe, wodurch der andere Reibbremsbelag 23 gegen die andere Seite der Bremsscheibe 22 gedrückt wird und der Bremskolben 20 wird zurückgedrückt und verdrängt Hydraulikflüssigkeit aus einer Zylinderbohrung 31 im Bremssattel 19 der Scheibenbremse 6. Dadurch ist ein Bremsflüssigkeitsvolumen zur Verschiebung des Bremskolbens 20 zur Betätigung der Scheibenbremse 6, das vom Hauptbremszylinder 2 geliefert werden muss, verringert, ein Teil des Zustellwegs wird durch den Weggewinn aufgrund der Verschiebung des Keilkörpers 27 entlang der Schrägfläche des Widerlagers 28 gewonnen. Die Scheibenbremse 6 ist wegverstärkend. Es wird Bewegungsenergie der drehenden Bremsscheibe 22, die beim Bremsen von der Bremsscheibe 22 auf den gegen sie gedrückten Reibbremsbelag 21 übertragen wird, als Hilfsenergie zur Betätigung der Scheibenbremse 6 verwendet, die einen Teil zur Betätigung der Scheibenbremse 6 erforderlichen Energie bereitstellt. Lediglich der übrige Teil der Betätigungsenergie muss mit dem Hauptbremszylinder 2 aufgebracht werden.

In Umfangsrichtung zur Bremsscheibe 22 ist der Reibbremsbelag 21 bzw. der Keilkörper 27 mit Rückstellfedern 32 im Bremssattel 19 abgestützt. Die Rückstellfedern 32 wirken der Verschiebung des Reibbremsbelags 21 mit dem Keilkörper 27 entgegen und begrenzen den Verschiebeweg und die Selbstverstärkung der Scheibenbremse 6.

Eine Steifigkeit des Bremssattels 19 der selbstverstärkenden Scheibenbremse 6 ist höher als eine Steifigkeit des Bremssattels 19 der Scheibenbremse 5 ohne Selbstverstärkung, das Verhältnis der Steifigkeiten und Federraten c der Bremssättel 19 kann beispielsweise 4:1 sein. Durch verschiedene Federraten c der Bremssättel 19 der selbstverstärkenden Scheibenbremsen 6 und der Scheibenbremsen 5 ohne Selbstverstärkung lässt sich eine Pedalkraft/Pedalweg-Kennlinie der Fahrzeugbremsanlage 1 beeinflussen. Insbesondere werden die Federraten c der Bremssättel 19 so gewählt, dass sich näherungsweise eine Pedalkraft/Pedalweg-Kennlinie ergibt, wie sie von herkömmlichen hydraulischen Fahrzeugbremsanlagen bekannt und gewohnt ist, die keine selbstverstärkenden Radbremsen, allerdings vielfach einen (Unterdruck-)Bremskraftverstärker am Hauptbremszylinder aufweisen.

Für die umgekehrte Drehrichtung der Bremsscheibe 22 weisen der Keilkörper 27 und das Widerlager 28 die entgegengesetzt geneigten Schrägflächen auf. Eine Verschleißnachstellung erfolgt wie bei herkömmlichen Scheibenbremsen selbsttätig dadurch, dass sich der Bremskolben 20 beim Lösen der Scheibenbremse 6 um einen bestimmten Weg zurückbewegt, der durch elastische Verformung eines Kolbendichtrings 33 bestimmt ist. Mit zunehmendem Verschleiß der Reibbremsbeläge 21, 23 wird der Bremskolben 20 nicht mehr bis in seine ursprüngliche Ausgangslage bei neuen Reibbremsbelägen 21, 23 zurückbewegt.

Eine Federrate c der Rückstellfedern 32 ist so gewählt, dass bei einem maximalen Belagreibwert µ zwischen der Bremsscheibe 22 und dem Reibbremsbelag 21 ein Spannweg der Scheibenbremse 6 Null ist. Der Belagreibwert µ ist abhängig von Nässe, Verschmutzung, Temperatur. Sein Maximalwert kann mit etwa 0,45 bis 0,6 angenommen werden. Die Bedingung, dass der Spannweg der Scheibenbremse 6 bei maximalem Belagreibwert µ Null ist bedeutet, dass bei maximalem Belagreibwert µ die Zustellung des Reibbremsbelags 21, sobald dieser an der drehenden Bremsscheibe 22 anliegt, durch seine Verschiebung in Drehrichtung der Bremsscheibe 22 entlang der Schräge des Widerlagers 28 und nicht durch eine Bewegung des Bremskolbens 20 erfolgt. Ein Blockieren der Bremsscheibe 22 ist ausgeschlossen, da die Rückstellfedern 32 einer Weiterverschiebung des Reibbremsbelags 21 und damit einer Erhöhung der Bremskraft entgegenwirken. Die Höhe der Bremskraft ist vom hydraulischen Druck in der Zylinderbohrung 31 bestimmt.

Da die selbstverstärkenden Scheibenbremsen 6 mit den Scheibenbremsen 5 ohne Selbstverstärkung kommunizieren wirkt die Selbstverstärkung der selbstverstärkenden Scheibenbremse 6 auf die Scheibenbremsen 5 ohne Selbstverstärkung zurück. Es brauchen deswegen nicht alle Radbremsen 5, 6 selbstverstärkend ausgebildet sein. Ein Bremskraftverstärker ist aufgrund der Selbstverstärkungswirkung entbehrlich, eine Kraftübersetzung ergibt sich aufgrund des Verhältnisses der Kolbenflächen im Hauptbremszylinder 2 und der Bremskolben 20 der Scheibenbremsen 5, 6, das aufgrund der Selbstverstärkungswirkung zur Erzielung einer großen Bremskraft groß gewählt werden kann.

Erfindungsgemäß wird bei einem hohen Belagreibwert µ die Bremskraft der Radbremsen 5, 6 abgesenkt. Das erfolgt durch Öffnen der Ansaugventile 13, durch die ein Teil der bei Betätigung aus dem Hauptbremszylinder 2 verdrängten Bremsflüssigkeit in die Hydrospeicher 14 oder die zusätzlichen Hydrospeicher 34 strömt. Ebenso ist eine Absenkung des Radbremsdrucks durch Öffnen der Bremsdruckabsenkventile 10 möglich. Durch die genannten Maßnahmen, die einzeln oder in beliebiger Kombination gemeinsam durchgeführt werden können, wird eine Veränderung der Pedalkraft/Pedalweg-Kennlinie der Fahrzeugbremsanlage 1 bei Änderung des Belagreibwert µ bewirkt. Das bedeutet, die Abhängigkeit der Pedalkraft/Pedalweg-Kennlinie von einer Änderung des Belagreibwerts µ ist ebenso verringert wie die Rückwirkung auf eine Betätigungskraft des Fußbremspedals 18. Die Abhängigkeit der zu Erzielung einer bestimmten Bremskraft erforderlichen Pedalkraft von einem schwankenden Belagreibwert µ ist verringert. Zur Pedalkraftsteuerung oder -regelung ist es nicht notwendig, den Belagreibwert µ zu ermitteln. Es kann mit dem Drucksensor 16 und dem Pedalwegsensor 17 die Pedalkraft/Pedalweg-Kennlinie ermittelt und mit den beschriebenen Maßnahmen an eine Sollkennlinie angepasst werden.

## Patentansprüche

1. Verfahren zum Betrieb einer hydraulischen Fahrzeugbremsanlage, mit hydraulischen Radbremsen (5, 6), **dadurch gekennzeichnet, dass** die Fahrzeugbremsanlage (1) selbstverstärkende hydraulische Radbremsen (6) an Rädern einer Vorderachse und hydraulische Radbremsen (5) ohne Selbstverstärkung an Rädern einer Hinterachse aufweist, dass die selbstverstärkenden Radbremsen (6) eine mechanische Selbstverstärkungseinrichtung (25) mit einem Keilmechanismus (26) aufweisen, dass die selbstverstärkenden Radbremsen (6) eine Rückstellfeder (32) aufweisen, die einer Erhöhung einer Bremskraft entgegenwirkt, und dass bei hohen Belagreibwerten (µ) ventilgesteuert Bremsflüssigkeit in einen Hydrospeicher (14, 34) geleitet wird.

2. Verfahren nach Anspruch 1, **dadurch gekennzeichnet, dass** die selbstverstärkenden Radbremsen (6) eine andere Federrate (c) aufweisen als die Radbremsen (5) ohne Selbstverstärkung.

3. Verfahren nach Anspruch 2, **dadurch gekennzeichnet, dass** die selbstverstärkenden Radbremsen (6) eine höhere Federrate (c) aufweisen als die Radbremsen (5) ohne Selbstverstärkung.

4. Verfahren nach Anspruch 2, **dadurch gekennzeichnet, dass** ein Verhältnis der Federrate (c) der selbstverstärkenden Radbremsen (6) zu den Radbremsen (5) ohne Selbstverstärkung etwa 4:1 ist.

5. Verfahren nach Anspruch 1, **dadurch gekennzeichnet, dass** die Fahrzeugbremsanlage (1) keinen Bremskraftverstärker aufweist.

6. Verfahren nach Anspruch 1, **dadurch gekennzeichnet, dass** die selbstverstärkenden Radbremsen (6) wegverstärkend sind.

7. Verfahren nach Anspruch 1, **dadurch gekennzeichnet, dass** eine Federrate (c) der Rückstellfedern (32) so groß ist, dass bei einem maximalen Belagreibwert (µ) ein Spannweg der Radbremse (6) etwa Null ist.

8. Verfahren nach Anspruch 1, **dadurch gekennzeichnet, dass** durch ventilgesteuertes Leiten von Bremsflüssigkeit in Hydrospeicher (14, 34) eine Pedalkraft/Pedalweg-Kennlinie der Fahrzeugbremsanlage (1) beeinflusst wird.

## Claims

1. Method for operating a hydraulic vehicle braking system with hydraulic wheel brakes (5, 6), **characterized in that** the vehicle braking system (1) has self-reinforcing hydraulic wheel brakes (6) on wheels of a front axle and hydraulic wheel brakes (5) without self-reinforcement on wheels of a rear axle, **in that** the self-reinforcing wheel brakes (6) have a mechanical self-reinforcing device (25) with a wedge mechanism (26), **in that** the self-reinforcing wheel brakes (6) have a restoring spring (32) which counteracts an increase in a braking force, and **in that**, in the case of high lining friction values (µ), brake fluid is conducted into a hydraulic accumulator (14, 34) by valve control.

2. Method according to Claim 1, **characterized in that** the self-reinforcing wheel brakes (6) have a spring constant (c) different from that of the wheel brakes (5) without self-reinforcement.

3. Method according to Claim 2, **characterized in that** the self-reinforcing wheel brakes (6) have a higher spring constant (c) than the wheel brakes (5) without self-reinforcement.

4. Method according to Claim 2, **characterized in that** a ratio of the spring constant (c) of the self-reinforcing wheel brakes (6) to that of the wheel brakes (5) without self-reinforcement is about 4:1.

5. Method according to Claim 1, **characterized in that** the vehicle braking system (1) has no brake booster.

6. Method according to Claim 1, **characterized in that** the self-reinforcing wheel brakes (6) are travel-reinforcing.

7. Method according to Claim 1, **characterized in that** a spring constant (c) of the restoring springs (32) is such that, in the case of a maximum lining friction value (µ), an application travel of the wheel brake (6) is about zero.

8. Method according to Claim 1, **characterized in that** a pedal-force/pedal-travel characteristic curve of the vehicle braking system (1) is influenced by the valve-controlled conduction of brake fluid into the hydraulic accumulator (14, 34).

## Revendications

1. Procédé de fonctionnement d'un système de freinage hydraulique de véhicule, comprenant des freins de roue hydrauliques (5, 6), **caractérisé en ce que** le système de freinage de véhicule (1) présente des freins de roue hydrauliques à autoamplification (6) sur les roues d'un essieu avant et des freins de roue hydrauliques (5) sans autoamplification sur les roues d'un essieu arrière, **en ce que** les freins de roue à autoamplification (6) présentent un dispositif d'autoamplification mécanique (25) avec un mécanisme de clavette (26), **en ce que** les freins de roue à autoamplification (6) présentent un ressort de rappel (32) qui agit à l'encontre d'une augmentation d'une force de freinage, et **en ce que** du liquide de frein commandé par une soupape est introduit dans un accumulateur hydraulique (14, 34) en présence de valeurs de friction élevées des garnitures (µ).

2. Procédé selon la revendication 1, **caractérisé en ce que** les freins de roue à autoamplification (6) présentent une raideur de ressort (c) différente des freins de roue (5) sans autoamplification.

3. Procédé selon la revendication 2, **caractérisé en ce que** les freins de roue à autoamplification (6) présentent une raideur de ressort (c) plus élevée que les freins de roue (5) sans autoamplification.

4. Procédé selon la revendication 2, **caractérisé en ce qu'**un rapport de la raideur de ressort (c) des freins de roue à autoamplification (6) aux freins de roue (5) sans autoamplification est d'environ 4:1.

5. Procédé selon la revendication 1, **caractérisé en ce que** le système de freinage de véhicule (1) ne présente pas de servofrein.

6. Procédé selon la revendication 1, **caractérisé en ce que** les freins de roue à autoamplification (6) à multiplication de course.

7. Procédé selon la revendication 1, **caractérisé en ce qu'**une raideur de ressort (c) des ressorts de rappel (32) est si importante que dans le cas d'une valeur de friction maximale des garnitures (µ) une course de serrage des freins de roue (6) soit approximativement nulle.

8. Procédé selon la revendication 1, **caractérisé en ce qu'**une caractéristique force/course de la pédale du système de freinage de véhicule (1) est influencée par l'introduction commandée par soupape de liquide de frein dans des accumulateurs hydrauliques (14, 34).
